# EUROPÄISCHE PATENTSCHRIFT

(11) **EP 1 877 227 B1**
(45) Veröffentlichungstag und Bekanntmachung des Hinweises auf die Patenterteilung: **05.10.2011**
(21) Anmeldenummer: 06708178.6
(22) Anmeldetag: 10.02.2006
(51) Int. Cl.: B25D 17/08

(54) **EINSATZWERKZEUG UND WERKZEUGHALTER FÜR EINE HANDWERKZEUGMASCHINE**
INSERTION TOOL AND TOOLHOLDER FOR A HAND-HELD MACHINE TOOL
OUTIL D'INSERTION ET PORTE-OUTIL POUR UNE MACHINE OUTIL A MAIN

(30) Priorität: 01.04.2005 DE 102005015100
(43) Veröffentlichungstag der Anmeldung: 16.01.2008
(73) Patentinhaber: ROBERT BOSCH GMBH, 70442 Stuttgart (DE)
(72) Erfinder: ULLRICH, Andre, 70794 Filderstadt-Bernhausen (DE)
(86) Internationale Anmeldenummer: PCT/EP2006/050835
(87) Internationale Veröffentlichungsnummer: WO 2006/103137

(56) Entgegenhaltungen:
- DE-A1- 4 027 820
- DE-A1- 10 241 054
- DE-A1- 19 621 610

## Beschreibung

Die Erfindung betrifft ein Einsatzwerkzeug zum Einsetzen in einen Werkzeughalter einer Handwerkzeugmaschine gemäß dem Oberbegriff des Anspruchs 1, sowie einen Werkzeughalter für eine Handwerkzeugmaschine, insbesondere für einen Bohrhammer, gemäß dem Oberbegriff des Anspruchs 6.

### Stand der Technik

Im Unterschied zu Bohrmaschinen oder Schlagbohrmaschinen, wo der Schaft des Einsatzwerkzeugs in einem Spannfutter des Werkzeughalters fest eingespannt wird, weisen Bohrhämmer einen Werkzeughalter auf, wo der Schaft des Einsatzwerkzeugs in ein am vorderen Stimende offenes Hammerrohr axial beweglich eingeführt wird, wozu ein radiales Spiel zwischen dem Schaft und dem Hammerrohr vorhanden sein muss. Daraus ergibt sich, dass die Spitze des Einsatzwerkzeugs bei Bohrhämmern nur eine begrenzte Rundlaufgenauigkeit aufweist, die außerdem mit zunehmender Lebensdauer noch abnimmt, da die Werkzeugaufnahme des Hammerrohrs durch den hämmernden Betrieb im Lauf der Zeit aufgeweitet und dadurch das radiale Spiel zwischen dem Schaft des Einsatzwerkzeugs und dem Hammerrohr vergrößert wird.

Während dies bei einem Meißel- oder Schlagbohrbetrieb in der Regel ziemlich unkritisch ist, da dort entweder keine hohe Rundlaufgenauigkeit gefordert oder das Einsatzwerkzeug durch das Bohrloch selbst ausreichend zentriert wird, treten durch das Spiel zwischen Einsatzwerkzeug und dem Hammerrohr Probleme auf, wenn der Bohrhammer mit einem in geeigneter Weise adaptierten Rundschaftbohrer oder mit einem Mehrzweckbohrer mit einem sogenannten SDS Plus-Einsteckende bestückt und zum reinen Bohren von Holz oder Metall verwendet wird.

Bei den zuletzt genannten Werkzeugen mit SDS Plus-Einsteckende besitzt der Schaft zwei auf diametral entgegengesetzten Seiten seiner zylindrischen Umfangsfläche ausgesparte, zum hinteren Stirnende des Schaftes hin offene axiale Längsnuten, mit denen beim Einführen des Einsatzwerkzeugs in die Werkzeugaufnahme komplementäre Mitnehmer des Hammerrohrs in Eingriff treten, um die Drehung des Hammerrohrs auf das Werkzeug zu übertragen, sowie zwei im Winkelabstand von 90 Grad von den Längsnuten angeordnete Rastvertiefungen, mit denen beim Einführen des Werkzeugs in die Werkzeugaufnahme eine Rasteinrichtung in Eingriff tritt, um das Werkzeug begrenzt axial beweglich im Hammerrohr zu verriegeln.

Wegen der axialen Beweglichkeit dieser Werkzeuge im Hammerrohr muss insbesondere beim Bohren nach unten, zum Beispiel in einem Bohrständer, zuerst ein gewisser Axialweg überwunden werden, bevor eine axiale Kraft in das Werkzeug eingeleitet werden kann, was in Verbindung mit einem größeren radialen Spiel des Werkzeugschaftes im Hammerrohr dazu führt, dass ein genaues Anbohren eines Werkstücks, wie es zum Beispiel bei Werkstücken aus Holz oder Metall erforderlich ist, nahezu unmöglich wird.

Aus DE 102 41 054 A1 ist ein Einsatzwerkzeug mit einem in einen Werkzeughalter einer Handwerkzeugmaschine mit drehend antreibbarer Werkzeugaufnahme einsetzbaren Schaft, der eine außere zvlindrische Umfangsfläche, zwei in der Umfangsfläche ausgesparte, zu einem hinteren Stirnende des Schaftes hin offene axiale Längsnuten und zwei in der Umfangsfläche ausgesparte, im Winkelabstand von den Längsnuten angeordnete Rastvertiefungen aufweist, bekannt, wobei der Schaft in axialer Richtung vor den Längsnuten und den Rastvertiefungen eine über die Umfangsfläche überstehende, in Richtung des hinteren Stirnendes des Schaftes konisch verjüngte Zentrierfläche aufweist.

Ein derartiges Einsatzwerkzeug weist bei einer Benutzung mit einem drehenden Betrieb ungünstige Rundlaufeigenschaften auf. Eine Aufgabe der Erfindung ist es, diese Situation zu verbessern.

### Vorteile der Erfindung

Die o.g. Aufgabe lösen das erfindungsgemäße Einsatzwerkzeug und der erfindungsgemäße Werkzeughalter mit den in den Ansprüchen 1 bzw. 6 genannten Merkmalen sowie eine mit einem solchen Werkzeughalter bestückte Handwerkzeugmaschine mit den Merkmalen des Anspruchs 12.

Um einerseits eine möglichst gute Zentrierwirkung zu erzielen, andererseits jedoch im Bereich der gegeneinander angepressten Zentrierflächen ein Verkeilen des Werkzeugschaftes in der Werkzeugaufnahme infolge der über die Zentrierflächen übertragenen Andruckkraft zu vermeiden, sieht eine bevorzugte Ausgestaltung der Erfindung vor, dass die Zentrierfläche mit einer Längsachse des Schaftes einen Winkel zwischen 10 und 70 Grad und vorzugsweise zwischen 20 und 60 Grad einschließt.

Eine weitere bevorzugte Ausgestaltung der Erfindung sieht vor, dass der Überstand der Zentrierfläche über die zylindrische

Umfangsfläche des Schaftes an ihrem von den Längsnuten und den Rastvertiefungen abgewandten vorderen Stimende weniger als die Hälfte und mehr als ein Fünftel des Schaftdurchmessers im Bereich seiner zylindrischen Umfangsfläche beträgt. Mit diesen Abmessungen kann ohne Beeinträchtigung der gewünschten Zentrierwirkung einverhindert werden, dass eine gewöhnlich am vorderen Stimende des Werkzeughalters vorgesehene gummielastische Staubschutzkappe beim Einführen des Werkzeugschaftes übermäßig stark aufgeweitet werden muss bzw. bei der Entnahme des Werkzeugs das Herausziehen des Werkzeugschaftes aus dem Werkzeughalter behindert.

Die erfindungsgemäße Zentrierfläche ist besonders bei Einsatzwerkzeugen in Form von Holz- oder Metallbohrern von Nutzen, die nur im reinen Bohrbetrieb, d.h. bei abgeschalteter Schlagfunktion, eingesetzt werden. Da diese Werkzeuge in Bohrhämmern in der Regel nur ab und zu verwendet werden, ist es ausreichend, wenn die Zentrierfläche des Werkzeughalters von einer vergrößerten Fase am vorderen Stimende der Werkzeugaufnahme gebildet wird, wodurch zur Umrüstung gegenwärtig verwendeter Werkzeughalter abgesehen von der Anbringung der Fase am Stimende der Werkzeugaufnahme keine Veränderungen notwendig sind.

Da die zuvor genannten Einsatzwerkzeuge im Betrieb der Handwerkzeugmaschine keine Axialbewegung ausführen, ist es vorteilhaft, während des Betriebs für eine dauerhafte gegenseitige Anlage der Zentrierfläche des Einsatzwerkzeugs und der komplementären Zentrierfläche der Werkzeugaufnahme zu sorgen.

Um dies zu erreichen, wird gemäß einer ersten bevorzugten Variante vorgeschlagen, dass der Schaft des Einsatzwerkzeugs in axialer Richtung vor der Zentrierfläche mindestens einen über die zylindrische Umfangsfläche überstehenden, vorzugsweise ringförmig umlaufenden Vorsprung aufweist, dessen Vorderseite gegen eine nach hinten weisende Anschlagfläche einer am vorderen Stirnende des Werkzeughalters vorgesehenen gummielastischen Staubschutzkappe anliegt oder in eine komplementäre Vertiefung der Kappe eingreift, wenn die Zentrierfläche des Einsatzwerkzeugs nach dessen Einsetzen in die Werkzeugaufnahme gegen deren Zentrierfläche anliegt.

Gemäß einer zweiten Variante, die alternativ oder zusätzlich zur ersten Variante vorgesehen sein kann, ist der Abstand der zwischen der Zentrierfläche des Einsatzwerkzeugs und ihren Rastvertiefungen so gewählt, dass ein Rastelement der Rasteinrichtung des Werkzeughalters beim gegenseitigen Anschlagen der beiden Zentrierflächen gerade vollständig in eine der Rastvertiefungen im Schaft des Werkzeugs eingerastet ist und gegen deren hintere Begrenzung anliegt. Damit werden axiale Relativbewegungen zwischen dem Einsatzwerkzeug und der Werkzeugaufnahme in beiden Richtungen verhindert, in einer Richtung durch die gegeneinander anliegenden Zentrierflächen und in der anderen Richtung durch das gegen die hintere Begrenzung der Rastvertiefung anliegende Rastelement.

Durch die zuletzt genannte Maßnahme in Verbindung mit einer geeigneten axialen Positionierung der Zentrierfläche kann darüber hinaus auch verhindert werden, dass ein Döpper des Bohrhammers bis zum hinteren Ende des Einsatzwerkzeugs gelangt und gegen dieses anschlägt, so dass eine versehentlich eingestellte Schlagfunktion nicht zu einer Zerstörung des vorderen Stirnendes eines als Holz- oder Metallbohrer ausgebildeten Werkzeugs durch Anschlagen gegen den Grund eines Bohrlochs führen kann.

Die gleiche Wirkung wird erzielt, wenn das mit einer der Rastvertiefungen im Rasteingriff stehende Rastelement der Rasteinrichtung eine begrenzte Axialbewegung des Schaftes in der Werkzeugaufnahme zulässt, dieser jedoch verglichen mit anderen Werkzeugen hinter der Rastvertiefung eine etwas geringere Länge aufweist.

### Zeichnungen

Die Efindung wird nachfolgend in zwei Ausführungsbeispielen anhand der zugehörigen Zeichnungen näher erläutert. Es zeigen:
Figur 1 eine Längsschnittansicht eines Werkzeughalters eines elektrischen Handbohrhammers mit eingesetztem Bohrwerkzeug;
Figur 2 eine Querschnittsansicht des Werkzeughalters entlang der Linien II-II in Figur 1;
Figur 3 eine Seitenansicht eines hinteren Teils des aus dem Werkzeughalter entnommenen Bohrwerkzeugs;
Figur 4 eine weitere Seitenansicht des hinteren Teils des Bohrwerkzeugs aus einer andern Richtung;
Figur 5 eine Längsschnittansicht des hinteren Teils des Bohrwerkzeugs entlang der Linie V-V der Figur 4;
Figur 6 eine perspektivische Ansicht des hinteren Teils des Bohrwerkzeugs;
Figur 7 eine Längsschnittansicht einer nicht erfindungsgemäßen Abwandlung des Werkzeughalters und des Bohrwerkzeugs.

### Beschreibung der Ausführungsbeispiele

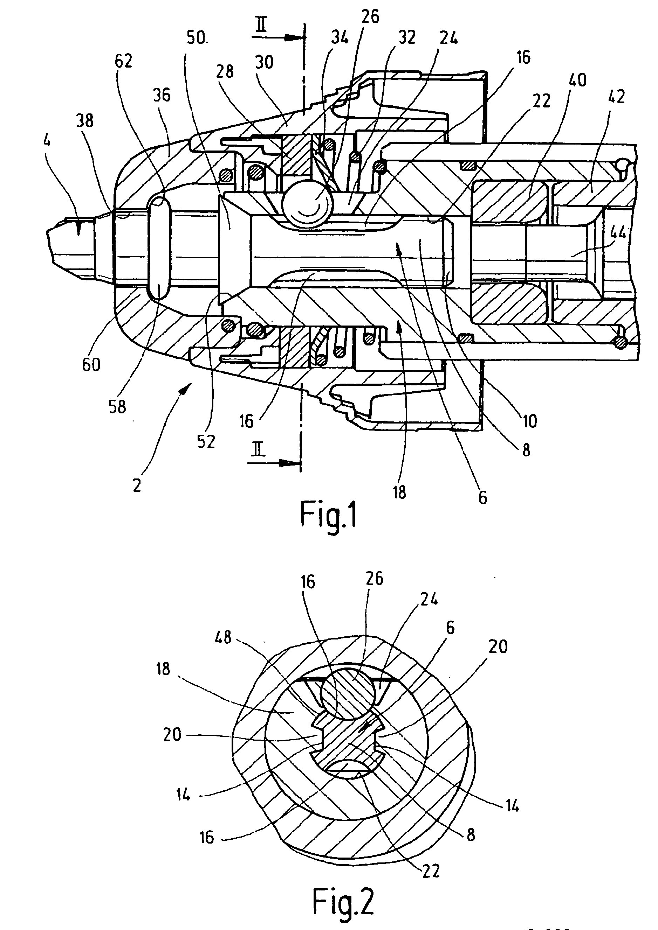

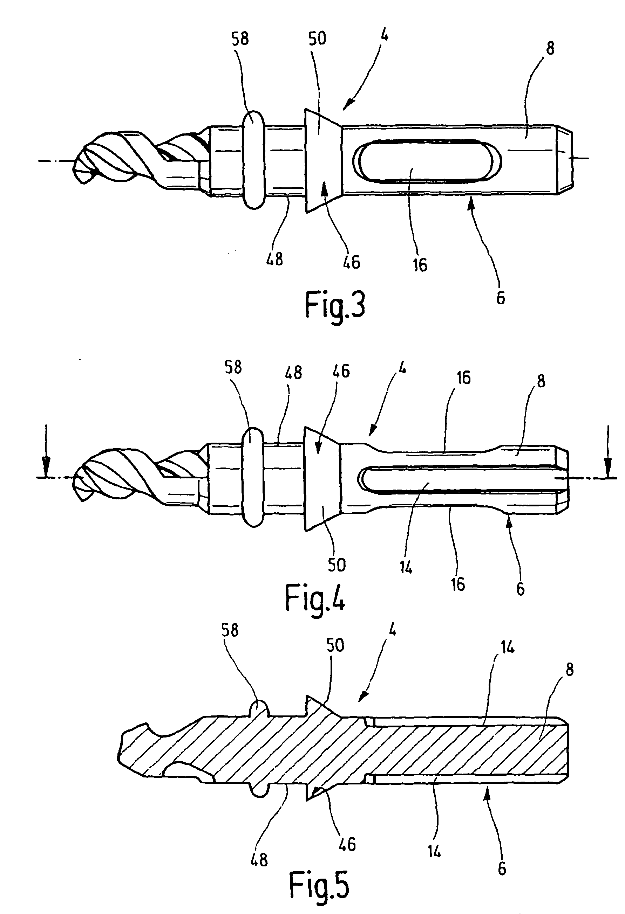

Die in der Zeichnung dargestellten Werkzeughalter 2 eines elektrisch angetriebenen Handbohr- oder Kombihammers sind zur Aufnahme von Einsatzwerkzeugen 4 vorgesehen, die ein sogenanntes SDS Plus-Einsteckende 6 aufweisen. Bei diesen Einsatzwerkzeugen 4 weist der zylindrische Schaft 8 in seiner äußeren Umfangsfläche zwei diametral entgegengesetzte, in Längsrichtung des Schaftes 8 verlaufende und an seinem hinteren Stimende 10 offene axiale Längsnuten 14 sowie zwei im Winkelabstand von jeweils 90 Grad zu den Längsnuten 14 in der Umfangsfläche ausgesparte, diametral entgegengesetzte kalottenförmige Rastvertiefungen 16 auf, wie am besten in den Figuren 2 bis 7 dargestellt.

Wie am besten in Fig. 1 und 8 dargestellt, umfassen die Werkzeughalter 2 in bekannter Weise eine an beiden Stirnenden offene Werkzeugaufnahme in Form eines Hammerrohrs 18, das von einer Antriebsspindel (neiht dargestellt) des Handbohr- oder Kombihammers um seine Längsachse drehend angetrieben wird. Zur Übertragung der Drehbewegung des Hammerrohrs 18 auf das in den Werkzeughalter 2 eingesetzte Werkzeug 4 weist das Hammerohr 18 zwei nach innen über seine zylindrische Innenfläche 22 überstehende diametral gegenüberliegende Mitnehmerstege 20 auf. Diese beiden Mitnehmerstege 20 treten mit den beiden axialen Längsnuten 14 im Schaft 8 des Werkzeugs 4 in Eingriff, wie am besten in Fig. 2 dargestellt, wenn der Schaft 8 von vorne her in das Hammerrohr 18 eingeführt wird.

Das Hammerrohr 18 weist an seiner Oberseite eine Aussparung 24 auf, durch die eine Rastkugel 26 einer Verriegelungseinrichtung zur axialen Verriegelung bzw. Verrastung des Einsatzwerkzeugs 4 im Hammerrohr 18 mit einer der beiden Rastvertiefungen 16 im Schaft 8 des in das Hammerrohr 18 eingeführten Einsatzwerkzeugs 4 in Eingriff gebracht wird. Die Aussparung 24 weist einen konischen Querschnitt (Fig. 2) auf, der einen vollständigen Eintritt der Rastkugel 26 ins innere des Hammerrohrs 18 verhindert. Die Rastkugel 26 wird in der Aussparung 24 von einem Schließring 28 festgehalten, der das Hammerrohr 18 in Umfangsrichtung umgibt und mittels einer das Gehäuse des Werkzeughalters 2 bildenden Betätigungshülse 30 entgegen der Kraft einer Verriegelungsfeder 32 in Bezug zum Hammerrohr 18 axial nach hinten verschiebbar ist, um das Einsatzwerkzeug 4 vor einer Entnahme freizugeben bzw. zu entriegeln. Zwischen den Schließring 28 und die Veniegelungsfeder 32 ist ein Halteblech 34 eingesetzt, das sich beim Einführen des Einsatzwerkzeugs 4 ins Hammerrohr 18 entgegen der Kraft der Feder 32 verschiebt und dadurch zulässt, dass sich die Rastkugel 26 von der Längsachse des Hammerrohrs 18 weg nach außen bewegt, bis sich die Rastvertiefung 16 im Schaft 8 des Werkzeugs 4 unter die Aussparung 26 im Hammerrohr 18 schiebt und die Kugel 26 vom Halteblech 34 in die Rastvertiefung 16 gedrückt wird.

An seinem vorderen, in Arbeitsrichtung weisenden Stimende trägt das Hammerrohr 18 eine aus einem gummielastischen Material bestehende Staubschutzkappe 36, die über das vordere Stirnende des Hammerrohrs 18 übersteht und eine zylindrische axiale Durchtrittsöffnung 38 für den Schaft 8 des Werkzeugs 4 aufweist.

In das erweiterte hintere Stimende des Hammerrohrs 18 ist eine aus mehreren Teilen 40, 42 bestehende Döpperführung eingesetzt, in der ein Döpper 44 axial beweglich gelagert ist. Der Döpper 44 dient dazu, die im Schlagbetrieb des Handbohr- oder Kombihammers von einem Schlagwerk (nicht dargestellt) auf ein hinteres Stirnende des Döppers 44 aufgebrachten Schläge auf ein in den Werkzeughalter 2 eingesetztes, schlagend arbeitendes Werkzeug, wie einen Meißel oder ein Schlagbohrwerkzeug, zu übertragen.

Wenn der Handbohr- oder Kombihammer zum Bohren von Metall oder Holz verwendet werden soll, wird das Schlagwerk abgeschaltet und der Werkzeughalter 2 mit einem Einsatzwerkzeug in Form des in der Zeichnung dargestellten Metall- oder Holzbohrers 4 bestückt, der ein modifiziertes SDS Plus-Einsteckende 6 aufweist. Dieses modifizierte Einsteckende 6 gewährleistet zum einen, dass das Bohrwerkzeug 4 selbst im Falle einer verschleißbedingten Aufweitung der zylinderischen Innenfläche 22 des Hammerrohrs 18 gute Rundlaufeigenschaften aufweist, und verhindert zum anderen eine unerwünschte Axialbewegung des Bohrwerkzeugs 4 im Werkzeughalter 2. Diese Axialbewegung mach bei konventionellen Einsteckenden vor allem beim Bohren nach unten ein genaues Anbohren nahezu unmöglich, weil das Bohrwerkzeug durch sein Eigengewicht bis zum Anschlagen der Rastkugel 26 gegen das hintere Ende der Rastvertiefung 16 nach unten rutscht und der Bohr- oder Kombihammer zuerst um diese Distanz nachgeführt werden muss, bevor eine Axialkraft auf das Bohrwerkzeug 4 übertragen werden kann.

Bei dem in der Zeichnung dargestellten Metall- oder Holzbohrwerkzeug 4 mit dem modifizierten SDS Plus-Einsteckende 6 weist der Schaft 8 vor dem vorderen Stimende der beiden Längsnuten 14 und der beiden Rastvertiefungen 16 einen über seine Umfangsfläche 48 überstehenden Kragen 46 auf, der nach hinten zu von einer konisch verjüngten Zentrierfläche 50 begrenzt wird. Wie am besten in Fig. 1 und 8 dargestellt, liegt diese Zentrierfläche 50 gegen eine komplementäre konische Zentrierfläche 52 am vorderen Stimende des Hammerrohrs 18 an, nachdem das Bohrwerkzeug 4 in den Werkzeughalter 2 eingesetzt worden ist. Beim Andrücken des Bohrwerkzeugs 4 gegen ein Werkstück wird die Zentrierfläche 50 gegen die Zentrierfläche 52 angepresst, die dabei ungeachtet einer verschließbedingten Aufweitung der Innenfläche 22 des Hammerohrs 18 für eine selbsttätige Zentrierung des Bohrwerkzeugs 4 im Werkzeughalter 2 sorgt.

Die Zentrierfläche 52 wird von einer vergrößerten Fase am vorderen Stirnende des Hammerrohrs 18 gebildet und weist in Bezug zur Längsachse des Hammerrohrs 18 bzw. des Bohrwerkzeugs 4 denselben Neigungswinkel wie die Zentrierfläche 50 auf. Dieser Neigungswinkel ist so gewählt, dass sich die beiden Zentrierflächen 50, 52 beim Aufbringen einer axialen Kraft auf die Bohrerspitze nicht verklemmen, ist jedoch ansonsten so klein wie möglich.

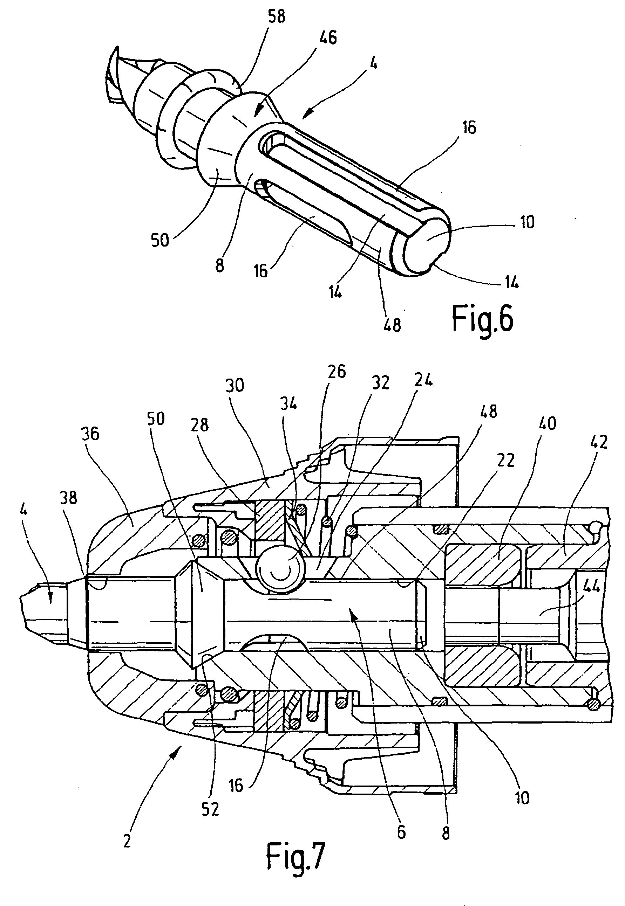

Nach vorne zu kann der Kragen 24 durch eine zur Längsachse des Werkzeugs 4 senkrechte Schulter 54 (Figuren 1 bis 5) oder eine schräge Schulter 56 (Fig. 7) begrenzt werden, wobei die zuletzt genannte Form den Hindurchtritt des Kragens 46 durch die

Öffnung 38 herum mit radialen Einschnitten (nicht dargestellt) versehen sein, die ein Aufweiten ihres die Durchtrittsöffnung 38 umgebenden Teils 60 beim Hindurchtritt des Kragens 46 während des Einführens und der Entnahme des Werkzeugs 4 erleichtern.

Um die beiden Zentrierflächen 50, 52 während des Bohrbetriebs in gegenseitiger Anlage zu halten, weist das in den Figuren 1 bis 6 dargestellte Bohrwerkzeug 4 einen im axialen Abstand vor dem Kragen 46 über seine Umfangsfläche 48 überstehenden Ringwulst 58 auf. Der Ringwulst 58 ist so angeordnet, dass er sich hinter dem die Durchtrittsöffnung 38 umgebenden Teil 60 der Staubschutzkappe 36 befindet, wenn die Zentrierflächen 50, 52 gegeneinander anliegen, und mit seiner Vorderseite gegen eine hintere Anlagefläche 62 des Teils 60 anliegt.

Bei dem in Fig. 7 dargestellten Bohrwerkzeug 4 fehlt die erfindungsgemäße Ringwulst 58. Jedoch ist sind dort die beiden Rastvertiefungen 16 nach hinten zu verkürzt ausgebildet, so dass die Rastkugel 26 gerade vollständig in die eine der beiden Rastvertiefungen 16 eingerastet ist und gegen deren hintere Begrenzung anliegt, wenn die beiden Zentrierflächen 50, 52 zur Anlage kommen. Auch durch diese Maßnahme kann eine Axialbewegung des Bohrwerkzeugs 4 im Werkzeughalter 2 verhindert werden.

In beiden Fällen kann die Länge des Schaftes 8 etwas kürzer als die Länge des Schaftes von schlagenden Einsatzwerkzeugen gemacht werden, so dass das hintere Stimende 10 des Schaftes 8 bei gegenseitiger Anlage der beiden Zentrierflächen 50, 52 nicht vom Döpper 44 erreicht wird, um bei einem versehentlichen Zuschalten des

Schlagwerks eine Beschädigung des Bohrwerkzeugs 4 zu vermeiden.

## Patentansprüche

1. Einsatzwerkzeug mit einem in einen Werkzeughalter einer Handwerkzeugmaschine mit drehend antreibbarer Werkzeugaufnahme einsetzbaren Schaft, der eine äußere zylindrische Umfangsfläche, zwei in der Umfangsfläche ausgesparte, zu einem hinteren Stimende des Schaftes hin offene axiale Längsnuten und zwei in der Umfangsfläche ausgesparte, im Winkelabstand von den Längsnuten angeordnete Rastvertiefungen aufweist, wobei der Schaft (8) in axialer Richtung vor den Längsnuten (14) und den Rastvertiefungen (16) eine über die Umfangsfläche (48) überstehende, in Richtung des hinteren Stirnendes (10) des Schaftes (8) konisch verjüngte Zentrierfläche (50) aufweist, **dadurch** gekenntzeichnet, dass der Schaft (8) in axialer Richtung vor der Zentrierfläche (50) mindestens einen über die zylindrische Umfangsfläche (48) überstehenden Vorsprung (58) aufweist.

2. Einsatzwerkzeug nach Anspruch 1, **dadurch gekennzeichnet, dass** die Zentrierfläche (50) mit einer Längsachse des Schaftes (8) einen Winkel zwischen 10 und 70 Grad einschließt.

3. Einsatzwerkzeug nach Anspruch 1 oder 2, **dadurch gekennzeichnet, dass** der maximale Überstand der Zentrierfläche (50) über die zylindrische Umfangsfläche (48) weniger als die Hälfte und mehr als ein Fünftel des Durchmessers der Umfangsfläche (48) des Schaftes (8) beträgt.

4. Einsatzwerkzeug nach einem der vorhergehenden Ansprüche, **dadurch gekennzeichnet, dass** sich der Vorsprung (58) ringförmig um den Schaft (8) erstreckt.

5. Einsatzwerkzeug nach einem der vorangehenden Ansprüche, **dadurch gekennzeichnet, dass** es ein Metall- oder Hotzbohrwerkzeug (4) ist.

6. Werkzeughalter mit einem Einsatzwerkzeug nach einem der vorangehenden Ansprüche für eine Handwerkzeugmaschine, insbesondere für einen Bohrhammer, mit einer drehend antreibbaren Werkzeugaufnahme zur Aufnahme eines Schaftes eines Einsatzwerkzeugs nach einem der vorangehenden Ansprüche, wobei die Werkzeugaufnahme ein offenes vorderes Stirnende zum Einführen des Schaftes des Einsatzwerkzeugs, eine innere zylindrische Umfangsfläche und zwei nach innen über die Umfangsfläche oberstehende, mit axialen Langsnuten im Schaft des Einsetzwerkzeugs in Eingriff tretende Mitnehmer und in axialer Richtung vor den Mitnehmern (20) eine nach hinten zu konisch verjüngte Zentrierfläche (52) aufweits, sowie mit einer Rasteinrichtung zum Eingriff mit einer Rastvertiefung im Schaft des Einsatzwerkzeugs , **gekennzeichnet durch** eine den Schaft (8) des Einsatzwerkzeugs (4) umgebende gummielastische Staubschutzkappe (36) mit einer nach hinten weisende Anlagefläche (62) für einen Ober eine äußere zylindrische Umfangsfläche (48) des Schaftes (8) des Einsatzwerkaeugs (4) überstehenden Vorsprung (58)

7. Werkzeughalter nach Anspruch 6, **dadurch gekennzeichnet dass** die Zentrierfläche (52) als vergrößerte Fase an einem vorderen Stimende der Werkzeugaufnahme (18) ausgebildet ist.

8. Werkzeughalter nach Anspruch 6 oder 7, **dadurch gekennzeichnet, dass** die Zentrierfläche (52) mit einer Längsachse der Weitzeugaufnahme (18) einen Winkel einschließt, der komplementär zum Neigungswinkel der konisch verjüngten Zentrierfläche (50) des Einsatzwerkzeugs (4) ist.

9. Werkzeughalter nach einem der Ansprüche 6 bis 8, **dadurch gekennzeichnet, dass** den Schaft (8) des Einsatzwerkzeugs (4) gegen die Zentrierfläche (52) anliegend arretierbar ist.

10. Werkzeughalter nach einem der Ansprüche 6 bis 9, **dadurch gekennzeichnet, dass** ein Rastelement (26) der Rasteinrichtung gegen eine hintere Begrenzung der Rastvertiefung (16) anliegt, wenn die Zentrierflächen (50, 52) der Werkzeugaufiahrne (18) und des Einsatzwerkzeugs (4) gegeneinander anliegen.

11. Werkzeughalter nach einem der Ansprüche 6 bis 10, **dadurch gekennzeichnet, dass** ein hinteres Stimende (10) des Einsatzwerkzeugs (4) nicht mit einem In seiner vordersten Stellung befindlichen Schlagübertragungselement (44) der Handwerkzeugmaschine in Berührung kommt, wenn die Zentrierflächen (50, 52) der Werkzeugaufnahme (18) und des Einsatzwerkzeugs (4) gegeneinander anliegen.

12. Handwerkzeugmaschine, insbesondere Bohrhammer, **gekennzeichnet durch** einen Werkzeughalter (2) nach einem der Ansprüche 6 bis 11

## Claims

1. Application tool comprising a shank which can be inserted into a tool holder of a portable power tool having a rotationally drivable tool receptacle and which has an outer cylindrical circumferential surface, two axial longitudinal grooves recessed in the circumferential surface and open towards a rear end face of the shank, and two latching recesses recessed in the circumferential surface and arranged at an angular distance from the longitudinal grooves, wherein the shank (8), in the axial direction in front of the longitudinal grooves (14) and the latching recesses (16), has a centring surface (50) projecting beyond the circumferential surface and conically tapered in the direction of the rear end face (10) of the shank (8), **characterized in that** the shank (8), in the axial direction in front of the centring surface (50), has at least one projection (58) projecting beyond the cylindrical circumferential surface (48).

2. Application tool according to Claim 1, **characterized in that** the centring surface (50) encloses an angle of between 10 and 70 degrees with a longitudinal axis of the shank (8).

3. Application tool according to Claim 1 or 2, **characterized in that** maximum projecting distance of the centring surface (50) beyond the cylindrical circumferential surface (48) is less than half and more than one fifth of the diameter of the circumferential surface (48) of the shank (8).

4. Application tool according to one of the preceding claims, **characterized in that** the projection (58) extends in an annular manner around the shank (8).

5. Application tool according to one of the preceding claims, **characterized in that** it is a metal- or wood-drilling tool (4).

6. Tool holder having an application tool according to one of the preceding claims for a portable power tool, in particular for a rotary hammer, comprising a rotationally drivable tool receptacle for accommodating a shank of an application tool according to one of the preceding claims, wherein the tool receptacle has an open front end face for inserting the shank of the application tool, an inner cylindrical circumferential surface, two drivers projecting inwards beyond the circumferential surface and coming into engagement with axial longitudinal grooves in the shank of the application tool, and, in the axial direction in front of the drivers (20), a centring surface (52) tapered conically rearwards, and comprising a latching device for engaging with a latching recess in the shank of the application tool, **characterized by** an elastomeric dust protection cap (36) surrounding the shank (8) of the application tool (4) and having a bearing surface (62) pointing rearwards for a projection (58) projecting beyond an outer cylindrical circumferential surface (48) of the shank (8) of the application tool (4).

7. Tool holder according to Claim 6, **characterized in that** the centring surface (52) is formed as an enlarged bevel on a front end face of the tool receptacle (18).

8. Tool holder according to Claim 6 or 7, **characterized in that** the centring surface (52) encloses an angle with a longitudinal axis of the tool receptacle (18), said angle being complementary to the angle of inclination of the conically tapered centring surface (50) of the application tool (4).

9. Tool holder according to one of Claims 6 to 8, **characterized in that** the shank (8) of the application tool (4) can be locked bearing against the centring surface (52).

10. Tool holder according to one of Claims 6 to 9, **characterized in that** a latching element (26) of the latching device bears against a rear boundary of the latching recess (16) when the centring surfaces (50, 52) of the tool receptacle (18) and of the application tool (4) bear against one another.

11. Tool holder according to one of Claims 6 to 10, **characterized in that** a rear end face (10) of the application tool (4) does not come into contact with a percussion transmission element (44), located in its foremost position, of the portable power tool when the centring surfaces (50, 52) of the tool receptacle (18) and of the application tool (4) bear against one another.

12. Portable power tool, in particular a rotary hammer, **characterized by** a tool holder (2) according to one of Claims 6 to 11.

## Revendications

1. Outil d'application comprenant un arbre pouvant être inséré dans un porte-outil d'une machine-outil à main avec un logement d'outil pouvant être entraîné en rotation, qui présente une surface périphérique cylindrique extérieure, deux rainures longitudinales axiales pratiquées dans la surface périphérique, ouvertes vers une extrémité frontale arrière de l'arbre et deux renfoncements d'encliquetage pratiqués dans la surface périphérique, disposés à distance angulaire des rainures longitudinales, l'arbre (8) présentant, dans la direction axiale avant les rainures longitudinales (14) et les renfoncements d'encliquetage (16) une surface de centrage (50) se rétrécissant coniquement dans la direction de l'extrémité frontale arrière (10) de l'arbre (8), dépassant de la surface périphérique (48), **caractérisé en ce que** l'arbre (8) présente dans la direction axiale avant la surface de centrage (50) au moins une saillie (58) dépassant au-delà de la surface périphérique cylindrique (48).

2. Outil d'application selon la revendication 1, **caractérisé en ce que** la surface de centrage (50) forme avec un axe longitudinal de l'arbre (8) un angle compris entre 10 et 70 degrés.

3. Outil d'application selon la revendication 1 ou 2, **caractérisé en ce que** le dépassement maximal de la surface de centrage (50) au-delà de la surface périphérique cylindrique (48) est inférieur à la moitié et supérieur à un cinquième du diamètre de la surface périphérique (48) de l'arbre (8).

4. Outil d'application selon l'une quelconque des revendications précédentes, **caractérisé en ce que** la saillie (58) s'étend sous forme annulaire autour de l'arbre (8).

5. Outil d'application selon l'une quelconque des revendications précédentes, **caractérisé en ce qu'**il s'agit d'un outil de perçage du métal ou du bois (4).

6. Porte-outil comprenant un outil d'application selon l'une quelconque des revendications précédentes, pour une machine-outil à main, en particulier pour un marteau perforateur, comprenant un logement d'outil pouvant être entraîné en rotation pour recevoir un arbre d'un outil d'application selon l'une quelconque des revendications précédentes, le logement d'outil présentant une extrémité frontale avant ouverte pour l'insertion de l'arbre de l'outil d'application, une surface périphérique cylindrique intérieure et deux dispositifs d'entraînement saillant vers l'intérieur au-delà de la surface périphérique, venant en prise avec des rainures longitudinales axiales dans l'arbre de l'outil d'application et, dans la direction axiale avant les dispositifs d'entraînement (20), une surface de centrage (52) se rétrécissant coniquement vers l'arrière, et comprenant un dispositif d'encliquetage pour l'engagement avec un renfoncement d'encliquetage dans l'arbre de l'outil d'application **caractérisé par** un capuchon de protection anti-poussière (36) ayant l'élasticité du caoutchouc et entourant l'arbre (8) de l'outil d'application (4), avec une surface d'appui (62) tournée vers l'arrière, pour une saillie (58) saillant au-delà d'une surface périphérique cylindrique extérieure (48) de l'arbre (8) de l'outil d'application (4).

7. Porte-outil selon la revendication 6, **caractérisé en ce que** la surface de centrage (52) est réalisée sous forme de biseau agrandi au niveau d'une extrémité avant du logement d'outil (18).

8. Porte-outil selon la revendication 6 ou 7, **caractérisé en ce que** la surface de centrage (52) forme avec un axe longitudinal du logement d'outil (18) un angle qui est complémentaire à l'angle d'inclinaison de la surface de centrage se rétrécissant coniquement (50) de l'outil d'application (4).

9. Porte-outil selon l'une quelconque des revendications 6 à 8, **caractérisé en ce que** l'arbre (8) de l'outil d'application (4) peut être bloqué en appui contre la surface de centrage (52).

10. Porte-outil selon l'une quelconque des revendications 6 à 9, **caractérisé en ce qu'**un élément d'encliquetage (26) du dispositif d'encliquetage s'applique contre une limite arrière du renfoncement d'encliquetage (16) lorsque les surfaces de centrage (50, 52) du logement d'outil (18) et de l'outil d'application (4) s'appliquent l'une contre l'autre.

11. Porte-outil selon l'une quelconque des revendications 6 à 10, **caractérisé en ce qu'**une extrémité frontale arrière (10) de l'outil d'application (4) ne vient pas en contact avec un élément de transfert de choc (44) de la machine-outil à main se trouvant dans sa position la plus avancée, lorsque les surfaces de centrage (50, 52) du logement d'outil (18) et de l'outil d'application (4) s'appliquent l'une contre l'autre.

12. Machine-outil à main, en particulier marteau perforateur, **caractérisée par** un porte-outil 1 (2) selon l'une quelconque des revendications 6 à 11.
